# FASCICULE DE BREVET EUROPEEN

(11) **EP 0 866 762 B1**
(45) Date de publication et mention de la délivrance du brevet: **08.09.1999**
(21) Numéro de dépôt: 96942398.7
(22) Date de dépôt: 13.12.1996
(51) Int. Cl.: B62D 63/02, B62D 47/02, B61D 13/00

(54) **UNITE MOTRICE SUSCEPTIBLE D'ETRE ACCOUPLEE A UNE ENCEINTE ROULANTE ET VEHICULE RESULTANT**
AN EINE TRANPORTEINHEIT ANKUPPELBARE ANTRIEBSEINHEIT UND RESULTIERENDES FAHRZEUG
DRIVE UNIT SUITABLE FOR COUPLING TO A WHEELED BODY, AND RESULTING VEHICLE

(30) Priorité: 13.12.1995 FR 9514765
(43) Date de publication de la demande: 30.09.1998
(73) Titulaire: Compagnie Generale D'Entreprises Automobiles C.G.E.A., 92000 Nanterre (FR); R & D Industries, Société à Responsabilité Limitee, 78490 Les Mesnuls (FR)
(72) Inventeur: CHENE, Richard, F-92200 Neuilly-sur-Seine (FR); DELAMOUR, Dominique, F-78490 Les Mesnuls (FR); RODI, Olivier, F-78650 Saulx-Marchais (FR)
(74) Mandataire: Sauvage, Renée
(86) Numéro de dépôt international: FR9601994
(87) Numéro de publication internationale: WO9721585

(56) Documents cités:
- EP-A- 0 443 309
- EP-A- 0 533 028
- EP-A- 0 631 917
- EP-A- 0 633 173
- WO-A-87/05873
- DE-U- 9 306 486
- DE-U- 29 506 123

## Description

Unité motrice susceptible d'être accouplée à une enceinte roulante et véhicule résultant.

La présente invention a pour objet une unité motrice susceptible d'être accouplée directement, par des moyens d'accouplement/désaccouplement, à au moins une enceinte pourvue d'organes de roulement, dite "enceinte roulante", pour former un véhicule, et le véhicule résultant.

Plus précisément, l'invention concerne une unité motrice qui comporte des moyens moteurs et qui est munie de ses propres organes de roulement, étant entendu que, dans la présente description et dans les revendications, les termes "roulement" et "roulante" ne doivent pas être nécessairement pris au sens strict, comme on le verra plus loin.

Par "moyens d'accouplement/désaccouplement", on entend ici aussi bien les moyens de connexion mécaniques (accrochage de l'enceinte roulante à l'unité motrice) que les moyens de connexion électriques, pneumatiques ou hydrauliques de transmission de commande, d'information ou de signalisation.

A la connaissance des Déposants, il n'existe pas de véhicules du type précité pour le transport en commun de personnes, s agissant de transport routier. En matière de transport routier de marchandises, les camions semi-remorques sont par contre du type précité.

Appartiennent également au type précité, les trains, qu'ils soient conçus pour le transport des personnes ou pour celui des marchandises.

Dans le cas du transport routier de personnes (transport en commun), l'unité motrice ne fait qu'un avec l'enceinte roulante, abstraction faite des voitures-remorques connectées à certaines voitures d'autobus via un soufflet.

Dans les cas précités où l'unité motrice est distincte de l'enceinte roulante, l'unité motrice est constituée par le tracteur et l'enceinte roulante par la remorque (transport routier de marchandises) ou l'unité motrice est constituée par la locomotive et l'enceinte roulante par au moins un wagon ou une voiture (transport ferroviaire). Dans les deux cas, l'unité motrice, capable d'un déplacement autonome comporte au moins deux essieux tandis que l'enceinte roulante en comporte également au moins un. Une telle disposition impose la prévision d'un système de liaison articulé entre l'unité motrice et l'enceinte roulante et ledit système de liaison nécessite, dans le cas des véhicules routiers, un grand débattement pour les manoeuvres. En outre, l'unité motrice forme également poste de conduite et constitue donc un ensemble complexe, coûteux et volumineux.

La présente invention a pour but de remédier à ces inconvénients en proposant une unité motrice qui se distingue de celles précitées en ce sens qu'elle ne forme pas simultanément poste de conduite, d'où il s'ensuit qu'elle peut constituer une zone intermédiaire ou la queue du véhicule, le poste de conduite étant prévu dans la ou l'une des enceintes roulantes de transport à laquelle (auxquelles) l'unité motrice est accouplée ou étant lui-même un module spécifique.

Plus précisément, l'unité motrice selon l'invention est constituée d'une structure formée, d'une part, d'un châssis ayant deux bords opposés généralement parallèles à la direction de roulement, lequel châssis supporte une source d'énergie motrice et est lui-même supporté, le long desdits bords opposés, par une paire de parois latérales, à leur tour supportées, chacune, par au moins un organe de roulement et formant logement pour le passage de moyens de transmission depuis ladite source d'énergie motrice vers lesdits organes de roulement, lesquels sont aptes à transformer ladite énergie motrice en travail.

Une unité motrice de ce type est décrite, dans l'art antérieur, comme servant d'organe de connexion entre deux voitures d'un véhicule ferroviaire. Ainsi, EP-A-0 633 173 divulgue un train automoteur en plusieurs parties, comprenant un module, pourvu d'organes de roulement, et dans le plafond duquel sont disposés un moteur diesel et une génératrice, ainsi que deux voitures articulées de part et d'autre dudit module et dont chacune est supportée par un bogie moteur. Dans le même ordre d'idées, WO-A-87 05873 concerne un véhicule sans bogie comprenant un organe d'avancement en portique qui comporte, dans sa partie supérieure, une unité d'alimentation et, à chacune de ses extrémités, des organes de roulement moteurs ou non moteurs. L'organe d'avancement divulgué est destiné à recevoir une cellule pour voyageurs ou un conteneur et il est connecté, à chaque extrémité, à une unité d'extrémité qui est elle-même reliée, via un organe d'intercirculation, à une voiture adjacente.

Ces unités motrices connues ont pour inconvénient principal de ne pas pouvoir être connectées indifféremment à des voitures convenant au transport de voyageurs ou de marchandises.

L'invention a donc pour but de remédier à cette insuffisance de l'art antérieur en proposant une unité motrice qui forme une partie séparable du véhicule auquel elle appartient et est susceptible d'être accouplée, par un exploitant dudit véhicule, à des enceintes de transport différentes, de façon à former un véhicule adapté à un usage donné.

Pour ce faire, l'unité motrice selon l'invention est telle que, d'une part, ses parois latérales présentent chacune deux faces opposées généralement perpendiculaires à la direction de roulement, sur chacune desquelles sont prévus les moyens d'accouplement/désaccouplement précités et, d'autre part, lesdits moyens d'accouplement/désaccouplement sont susceptibles de coopérer avec des moyens d'accouplement/désaccouplement appariés dépendant tant d'une enceinte de transport de type conteneur que d'une enceinte destinée au transport de passagers et/ou formant poste de conduite. de manière à lier rigidement ladite unité motrice à ladite enceinte roulante.

L'unité selon l'invention peut être réalisée selon de multiples variantes affectant :
- la nature des organes de roulement qui pourront être, par exemple, des roues pour transport routier, des roues pour transport sur rails, des roues mixtes rail/route, ou même des chenilles ; au lieu d'organes de roulement stricto sensu, la structure pourra être pourvue de moyens adaptés à son déplacement, par exemple, sur coussin d'air,
- le nombre des organes de roulement lorsqu'il s'agit de roues,
- la nature de la source d'énergie motrice qui pourra être une source d'énergie thermique ou électrique,
- la puissance de la source d'énergie motrice,
- la longueur de l'unité motrice (châssis court, châssis long), etc...

Les combinaisons appropriées de ces variantes formeront autant de modules susceptibles d'être adaptés à tels ou tels types d'enceinte de transport, en fonction des besoins ou des circonstances. Ainsi, on pourra modifier la composition du véhicule, selon qu'il doit circuler sur route ou en milieu urbain, en y incluant un module pourvu d'un moteur thermique ou un module à moteur électrique. En cas de panne ou de nécessité d'entretien de routine, ou encore de rechargement de batteries dans le cas d'un moteur électrique, on remplacera simplement le module sur lequel il y a lieu d'intervenir par un module du même type, sans immobiliser l'enceinte de transport. Cela n'est évidemment pas possible lorsqu'il s'agit d'intervenir sur le moteur d'un autocar classique.

Inversement, à une même unité motrice pourront être connectées des enceintes de transport de types différents qui permettront à l'exploitant du véhicule de modifier la destination de celui-ci tout en conservant le même moteur, et de réduire les coûts d'exploitation en conséquence. Il sera ainsi possible de transformer en quelques heures, voire moins, un véhicule d'enlèvement d'ordures ménagères en autobus, en remplaçant simplement la benne à ordures par un module de transport de voyageurs. Cet autobus pourra ensuite être lui-même transformé en porte-container, par exemple.

Outre la souplesse d'utilisation et de composition qu'offre l'unité motrice selon l'invention sur rails comme sur route, elle permet de débarrasser totalement le plancher de l'enceinte de transport des organes de transmission, de sorte que le plancher peut être intégralement plat et surbaissé, facilitant, dans les transports en commun, l'accès des personnes handicapées et l'aménagement intérieur avec une possibilité d'augmenter le nombre de sièges pour un même encombrement du véhicule et, dans le cas du transport de marchandises, permettant un chargement optimal.

La capacité du véhicule peut être encore augmentée en utilisant une unité motrice qui, non seulement n'intègre pas de poste de conduite, mais n'est pas non plus adaptée au transport normal de passagers ou de marchandises, laquelle comporte de préférence une seule paire de roues et des parois latérales dont la dimension (longueur), dans la direction de roulement, n'excède pas les dimensions de l'unité motrice (largeur et hauteur) dans le plan perpendiculaire, c est-à-dire dans les directions perpendiculaires entre elles et à ladite direction de déplacement. On obtiendra ainsi une unité motrice présentant un encombrement minimal, de sorte que le véhicule résultant offrira une plus grande capacité de transport pour un même gabarit. Cela constitue une variante particulièrement avantageuse de l'invention, dans la mesure où elle permet de satisfaire aux exigences contradictoires imposées, d'une part, par un souci de rentabilité et, d'autre part, par la législation relative au gabarit maximal autorisé.

L'unité motrice pourra être interposée entre deux enceintes de transport dont l'une, dite "enceinte roulante de base", pourra comporter un poste de conduite et dont l'autre, dite "enceinte complémentaire" en sera dépourvue.

L'unité motrice pourra être interposée, en variante, entre un module formant spécifiquement poste de conduite et une enceinte roulante.

Avantageusement, l'unité motrice selon l'invention peut recevoir ou comporter un plancher, permettant ainsi, lorsqu'elle est incluse entre deux enceintes de transport, ou entre un module spécifique formant poste de conduite et une enceinte roulante, une circulation de personnes entre lesdites enceintes ou ledit poste de conduite et ladite enceinte.

De préférence, des moyens de suspension sont intégrés dans les parois latérales de l'unité motrice.

Comme indiqué plus haut, la présente invention vise également un véhicule pour le transport de personnes et/ou de marchandises, du type comprenant, d'une part, au moins une unité motrice telle que définie ci-dessus et, d'autre part, au moins une enceinte roulante, ladite unité motrice et ladite enceinte roulante comportant des moyens d'accouplement/désaccouplement appariés, véhicule dans lequel le poste de conduite est situé dans la ou dans l'une des enceintes roulantes.

Dans une forme d'exécution préférée, l'enceinte roulante de base ne comporte qu'un essieu.

L'enceinte complémentaire peut être soit à châssis court, dépourvu d'essieu, soit à châssis long et pourvu d'au moins un essieu. L'enceinte complémentaire à châssis long peut être pourvue, à ses deux extrémités, de moyens d'accouplement/désaccouplement appariés à ceux de l'unité motrice, de sorte que ladite enceinte complémentaire peut être interposée entre deux telles unités motrices.

Le module spécifique formant poste de conduite se distingue de l'enceinte roulante de base par le fait qu'il est dépourvu d'organes de roulement.

L'invention est décrite ci-après avec davantage de détails par référence aux dessins annexés dans lesquels :
- la figure 1 est une vue en perspective schématique d'une unité motrice selon l'invention,
- la figure 2 est une vue en perspective schématique d'un autobus selon l'invention, illustrant trois variantes de composition, à partir d'une première variante de structure de l'unité motrice, très voisine de celle de la figure 1,
- la figure 3 est une vue en perspective d'une autre variante d'exécution de l'unité motrice selon l'invention,
- la figure 4 est une vue en perspective d'un autobus incorporant l'unité motrice selon la figure 3, et
- les figures 5A à 5C sont des vues en perspective schématique illustrant les différentes étapes du procédé permettant de changer la composition d'un véhicule selon l'invention, dans le cas où l'unité motrice ne comporte qu'une paire de roues.

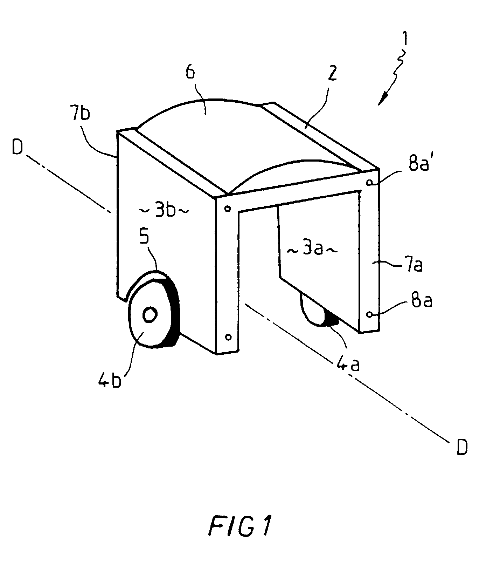

Si l'on se réfère à la figure 1, on voit une unité motrice selon l'invention, désignée dans son ensemble par 1, ayant une structure générale en U inversé. Le U définit une âme, ou toit, 2 et deux ailes, ou parois latérales, 3a, 3b qui supportent le toit le long de deux de ses côtés opposés parallèles à la direction de roulement D. Il est ménagé, dans chacune des parois latérales 3a, 3b, un logement 5 pour une roue motrice 4a, 4b. Des béquilles ou stabilisateurs non représentés sont prévus pour pouvoir maintenir l'unité dans la position illustrée.

Comme il ressort clairement de la figure 1, l'unité motrice 1 est dépourvue de poste de conduite.

Le toit 2 de l'unité constitue un châssis qui supporte une source d'énergie carénée 6. L'unité 1 comporte, en outre, une extrémité 7a proximale (par rapport à une enceinte roulante de base à laquelle sera raccordée l'unité motrice) et une extrémité distale 7b opposée. Les extrémités proximale et distale sont bien entendu perpendiculaires à la direction de roulement D. Il est prévu, dans l'extrémité proximale 7a, des moyens d'accouplement/désaccouplement tels que 8a, 8a', etc... à l'enceinte roulante de base précitée, lesquels moyens comprennent, outre des moyens d'accrochage entre l'unité motrice et ladite enceinte, des moyens de connexion de circuits électriques et/ou hydrauliques et/ou pneumatiques, à des fins de commande, d'information ou de signalisation entre l'unité motrice et l'enceinte roulante. L'extrémité distale 7b de l'unité 1 comporte, ou bien exactement les mêmes moyens d'accouplement/désaccouplement que l'extrémité proximale 7a, ce qui évite d'avoir à orienter l'unité 1 dans un sens précis avant de la connecter à une enceinte roulante de base (auquel cas l'extrémité distale ne se distingue en rien de l'extrémité proximale), ou bien des moyens d'accouplement/désaccouplement strictement limités à ceux nécessaires à la connexion soit avec une enceinte complémentaire, c'est-à-dire dépourvus, par exemple, des moyens qui assurent la connexion entre le démarreur et le moteur. Lorsque l'on voudra pouvoir inclure, dans le même véhicule, plus d'une unité motrice, il faudra bien entendu que les faces distale et proximale desdites unités soient munies des mêmes moyens d'accouplement/désaccouplement, en particulier pour que les commandes provenant du poste de conduite et destinées au moteur de la deuxième unité motrice atteignent effectivement ledit moteur.

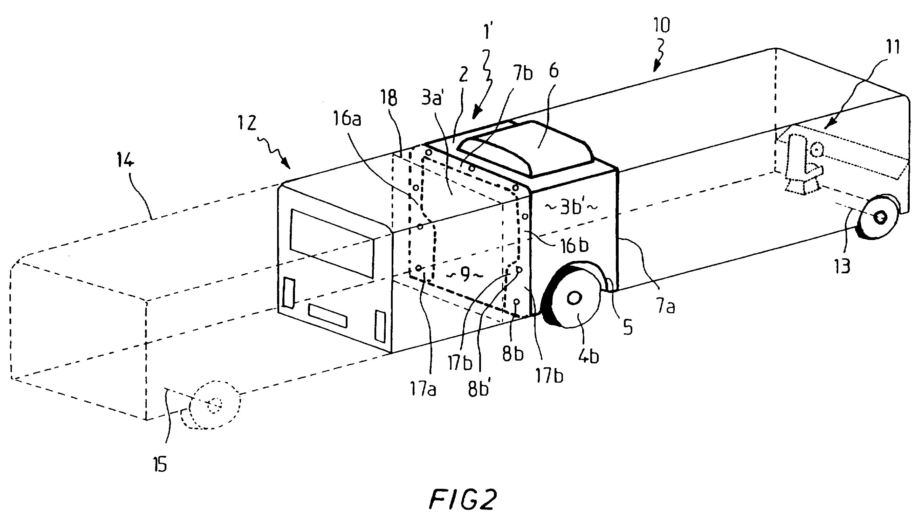

La composition d'un véhicule, à partir de l'unité motrice de la figure 1, ressort clairement de la figure 2. A la figure 2, on a utilisé les mêmes références qu'à la figure 1 pour désigner les mêmes pièces et les mêmes références suivies du signe prime pour désigner des pièces semblables.

L'unité motrice 1' de la figure 2 présente des différences mineures avec celle de la figure 1 : les parois latérales 3a'et 3b' comportent une partie supérieure 16a, 16b relativement mince et une partie inférieure 17a, 17b plus épaisse formant caisson. C'est dans ces caissons que sont ménagés les logements de roue. En outre, un plancher 9 équipe la structure en U de l'unité 1'.

Comme on le voit, l'unité motrice 1' est interposée entre une enceinte roulante de base 10 munie d'un poste de conduite 11 et une enceinte complémentaire 12 à châssis court. L'enceinte de base 10 comporte un unique essieu 13, à l'avant de l'enceinte, et il est prévu, à l'arrière, des stabilisateurs non représentés pour maintenir horizontal le plancher de l'enceinte lorsqu'elle n'est pas connectée à l'unité 1'. L'enceinte complémentaire 12 est dépourvue de roues.

On comprend que le moteur 6 est commandé depuis le poste de conduite 11. Un tel véhicule est d'une grande maniabilité. Cela constitue un avantage appréciable, en particulier pour les autobus qui peuvent quitter plus facilement les arrêts.

La figure 2 représente, en outre, deux variantes de composition du bus selon l'invention, à savoir une variante utilisant une enceinte complémentaire à châssis long 14, comportant un essieu 15, et une variante sans enceinte complémentaire, l'habitacle du bus étant fermé à l'arrière par un module de fond 18 simplement muni des mêmes dispositifs de signalisation que ceux prévus à l'arrière des enceintes complémentaires à châssis court ou long.

De la seule figure 2, il ressort clairement, que l'on peut adapter la capacité de l'autobus en fonction des besoins, par exemple des horaires de circulation.

On comprend également que le module 1', dont le moteur 6 est par exemple un moteur diesel, peut être remplacé par un module dont le moteur sera, par exemple, un moteur électrique lorsque le véhicule doit circuler dans un environnement particulièrement protégé contre la pollution ou le bruit. On comprend également qu'une telle unité motrice électrique fonctionnant sur batteries peut être déconnectée de la ou des enceintes de transport et remplacée par une unité motrice électrique identique, pour recharger les batteries sans immobiliser la ou lesdites enceintes de transport.

D'autres modulations possibles ont été indiquées dans la partie introductive de la présente description.

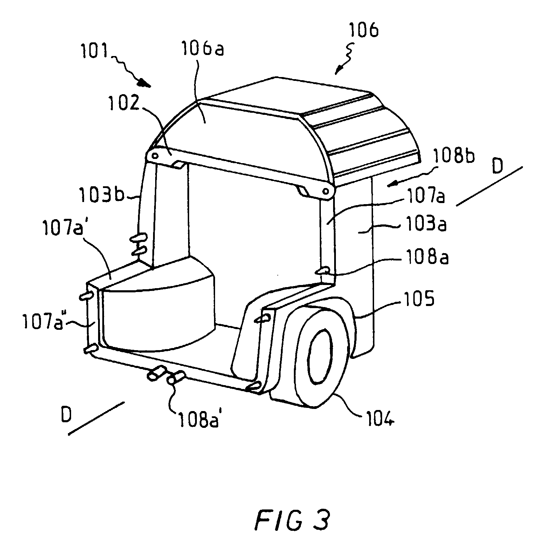

Si l'on examine maintenant la figure 3 où l'on a utilisé les mêmes références qu'à la figure l pour désigner les mêmes éléments, mais auqmentées de 100, on voit que l'unité motrice désignée dans son ensemble par 101, comprend, d'une part, un châssis 102 supportant une source d'énergie carénée 106 et, d'autre part, deux parois latérales opposées 103a, 103b qui sont parallèles à la direction de roulement de l'unité motrice. Il est ménagé, dans chacune des parois latérales 103a, 103b, un logement 105 pour une roue motrice 104.

Comme précédemment, l'unité motrice 101 est dépourvue de poste de conduite et elle n'est pas non plus adaptée au transport de passagers ou de marchandises.

L'unité 101 comporte, en outre, une extrémité proximale (par rapport à un poste de conduite spécifique) qui se distingue de l'extrémité proximale 7a de la figure 1 par le fait qu'elle comporte trois parties, à savoir une partie supérieure en U inversé 107a située dans un premier plan qui est sensiblement celui de la face proximale 106a du carénage, une partie inférieure en U droit 107a'' située dans un second plan, sensiblement parallèle au premier plan mais écarté de celui-ci, de sorte que, par rapport à la partie supérieure 107a, la partie inférieure 107a' se trouve en saillie, et une partie intermédiaire 107a' allant de la partie supérieure à la partie inférieure. Comme on le voit sur la figure 3, la dimension des parois latérales 103a,103b de l'unité motrice 101, dans la direction de roulement D, est inférieure à la dimension de l'extrémité proximale de l'unité motrice, entre lesdites parois 103a et 103b, dans une direction D' qui est perpendiculaire à D. L'encombrement de l'unité motrice 101 est donc réduit au minimum.

Il est prévu, dans l'extrémité proximale 107a et 107a'', des moyens d'accouplement/désaccouplement tels que 108a, 108a', etc... au poste de conduite.

L'extrémité distale 108b de l'unité 101 comporte des moyens d'accouplement/désaccouplement limités à ceux qui sont nécessaires à la connexion avec une enceinte roulante .

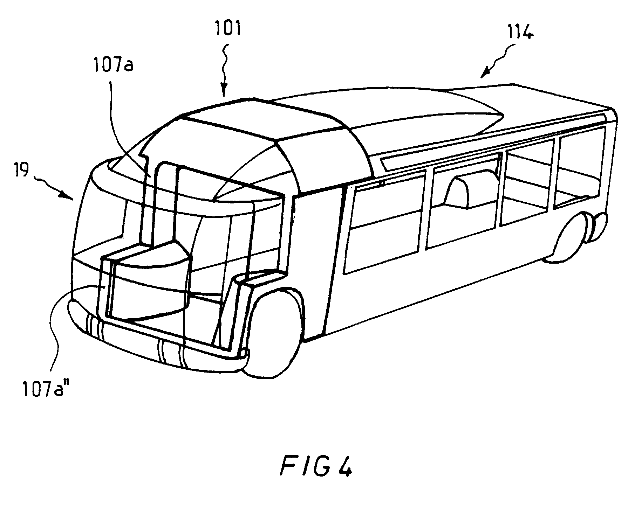

La position occupée par l'unité motrice 101 dans un véhicule, tel qu'un autobus, est illustrée à la figure 4.

On voit que l'unité motrice 101 est interposée entre un module de poste de conduite 19 et une enceinte roulante 114.

L'enceinte roulante 114 ne présente pas de particularité par rapport à l'enceinte complémentaire 14 de la figure 2. Par contre, à la différence de la forme d'exécution de la figure 2, le poste de conduite 19 ne fait pas partie d'une enceinte roulante, mais constitue un module spécifique, dépourvu de roues.

Le module formant poste de conduite 19 comporte, pour son raccordement à l'unité motrice 101, une face dont le profil est apparié à celui de la face proximale 107a,107a',107a'' de l'unité motrice 101 et qui comporte des moyens d'accouplement/désaccouplement appariés à ceux de ladite face proximale.

Les figures 5A à 5C illustrent un équipement permettant à l'exploitant d'un véhicule selon l'invention de modifier la composition dudit véhicule en fonction de ses besoins. Sur ces figures, les éléments de structure identiques -resp. analogues- à des éléments décrits en regard des figures précédentes sont désignés par des chiffres de référence identiques -resp. suivis du signe prime.

Si l'on se réfère tout d'abord à la figure 5A, on voit un véhicule selon l'invention qui est formé d'un poste de conduite 19 relié, via une unité motrice 101, à une enceinte roulante 23, ici une benne à ordures. Le véhicule illustré est manoeuvré par son conducteur dans la direction D, de manière à positionner l'unité motrice 101 dans l'espace défini par un portique 20 monté sur des roulettes 21 adaptées à se déplacer sur une piste de roulement 22. La piste 22 et le portique 20 sont par exemple installés au dépôt de l'exploitant.

Dans la forme d'exécution illustrée, une enceinte roulante 114', destinée au transport de passagers, est disposée le long de la piste 22 et elle est destinée à être substituée à la benne 23 de façon à convertir en autobus le véhicule d'enlèvement d'ordures ménagères décrit ci-dessus.

Pour ce faire, le portique 20 est tout d'abord mis en prise avec l'unité motrice 101 afin de désactiver les moyens d'accouplement 24 de cette dernière avec la benne 23. A cet effet, il pourra être avantageux de prévoir tous les équipements (non représentés), tels qu'une source d'énergie, des vérins, etc., assurant cette désactivation sur le portique 20 plutôt que sur le véhicule. Le véhicule pourra ainsi gagner en légèreté et bénéficiera de coûts de fabrication réduits.

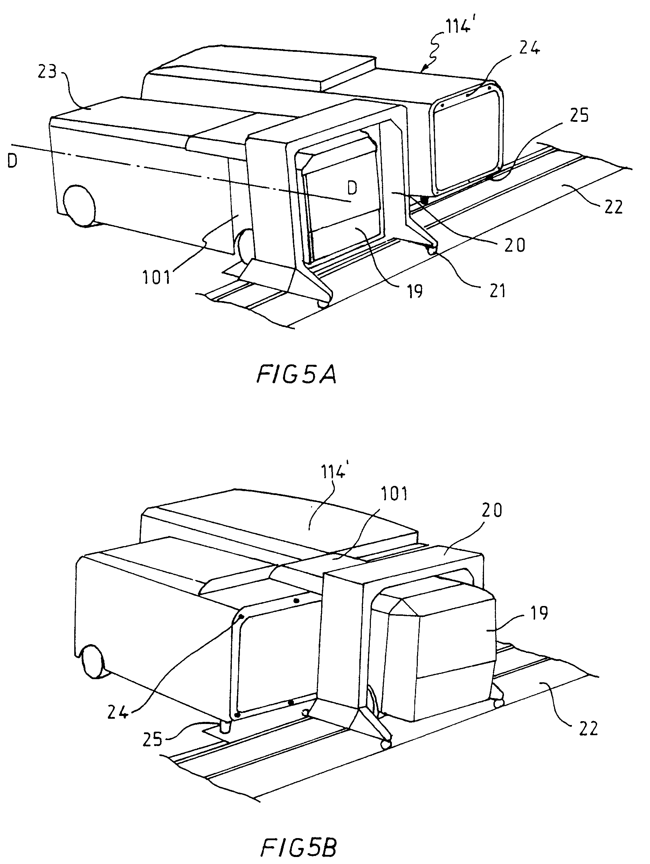

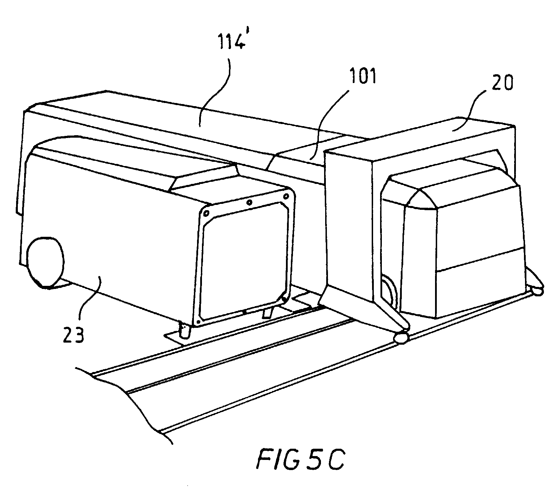

Comme illustré à la figure 5B, une fois désaccouplés de la benne 23, l'unité motrice 101 et le poste de conduite 19 associé sont transférés en vis-à-vis de l'enceinte roulante 114' en faisant coulisser le portique 20 le long de la piste 22. Lors de cette opération, la benne 23 est maintenue en position par des stabilisateurs 25, tout comme l'enceinte roulante 114' (figure 5A).

L'unité motrice 101 est ensuite mise en prise, par les équipements d'activation/désactivation du portique 20, avec l'enceinte roulante 114' qui est équipée des même moyens d'accouplement/désaccouplement 24 (figure 5A) que la benne 23. On se trouve alors dans la situation représentée à la figure 5C, c'est-à-dire en présence d'un autobus prêt à partir.

Les étapes décrites par référence aux figures 5A à 5C pourront être mises en oeuvre en trois quarts d'heure seulement, au plus en une demi journée.

On comprend donc que l'invention fournit un moyen simple, rapide et économique pour adapter un véhicule à un usage donné.

Il est bien entendu que la présente invention n'est pas limitée aux formes d'exécution représentées. En particulier, bien que l'on ait décrit son application à la composition de véhicules routiers, l'invention pourrait être appliquée au transport ferroviaire.

## Revendications

1. Unité motrice (1;101) susceptible d'être accouplée directement par des moyens d'accouplement/désaccouplement (8a,8a',8b,8b' ; 108a,108a'), à au moins une enceinte (10,14 ; 114) pourvue d'organes de roulement, dite "enceinte roulante", pour former un véhicule, laquelle unité motrice (1 ; 101) est constituée d'une structure formée, d'une part, d'un châssis (2 ; 102) ayant deux bords opposés généralement parallèles à la direction de roulement (D), lequel châssis (2) supporte une source d'énergie motrice (6) et est lui-même supporté, le long desdits bords opposés, par une paire de parois latérales (3a,3b ; 103a,103b), à leur tour supportées, chacune, par au moins un organe de roulement (4a,4b ; 104) et formant logement pour le passage de moyens de transmission depuis ladite source d'énergie motrice (6) vers lesdits organes de roulement, lesquels sont aptes à transformer ladite énergie motrice en travail, caractérisée en ce que
lesdites parois latérales (3a,3b ; 103a,103b) présentent chacune deux faces opposées (7a,7b ; 107a,107a',107a'',108) généralement perpendiculaires à la direction de roulement (D) et sur chacune desquelles sont prévus les moyens d'accouplement/désaccouplement (8a,8a',8b,8b' ; 108a,108a') précités,
et en ce que lesdits moyens d'accouplement/désaccouplement (8a,8a',8b,8b' ; 108a,108a') sont susceptibles de coopérer avec des moyens d'accouplement/désaccouplement appariés dépendant tant d'une enceinte de transport de type conteneur que d'une enceinte destinée au transport de passagers (12,14 ; 114) et/ou formant poste de conduite (19,10), de manière à lier rigidement ladite unité motrice à ladite enceinte roulante.
de sorte que ladite unité motrice (1 ; 101) forme une partie séparable dudit véhicule, susceptible d'être accouplée, par un exploitant de celui-ci, à des enceintes de transport différentes, de façon à former à un véhicule adapté à un usage donné.

2. Unité motrice selon la revendication 1, caractérisée en ce qu'elle n'est pas adaptée au transport normal de passagers ou de marchandises, ni à intégrer un poste de conduite, et en ce que la dimension de ses parois latérales (3a,3b ; 103a,103b), dans la direction de roulement (D), n'excède pas ses dimensions dans le plan perpendiculaire à ladite direction (D).

3. Unité motrice (1;101) selon la revendication 2, caractérisée en ce qu'elle comporte une paire unique de roues (4a,4b ; 104).

4. Unité motrice (1; 101) selon l'une quelconque des revendications précédentes, caractérisée en ce que lesdits organes de roulement (4a,4b ; 104) sont des roues pour transport routier, des roues pour transport sur rails, des roues mixtes rail/route ou des chenilles.

5. Unité motrice (1;101) selon l'une quelconque des revendications 1 à 4, caractérisée en ce que la source d'énergie motrice (6) est une source d'énergie thermique ou électrique.

6. Unité motrice (1;101) selon l'une quelconque des revendications 1 à 5, caractérisée en ce que des moyens de suspension sont intégrés dans lesdites parois latérales (3a,3b ; 103a,103b).

7. Véhicule incorporant l'unité motrice (1;101) selon l'une quelconque des revendications 1 à 6, caractérisé en ce qu'elle est interposée entre deux enceintes de transport (10,12 ; 10,14 ; 19,114).

8. Véhicule selon la revendication 7, caractérisé en ce que l'une desdites enceintes de transport (12 ; 19) est dépourvue d'organes de roulement.

9. Véhicule selon la revendication 8, caractérisé en ce que ladite unité de transport dépourvue d'organes de roulement est un module spécifique (19) formant poste de conduite.

10. Véhicule selon la revendication 7, caractérisé en ce que l'une desdites enceintes de transport (14 ; 114) ne comporte qu'un seul essieu.

## Claims

1. Drive unit (1; 101) capable of being coupled directly, by coupling/uncoupling means (8a, 8a', 8b, 8b'; 108a, 108a'), to at least one body (10, 14; 114) provided with rolling gear, known as "rolling body", to form a vehicle, which drive unit (1; 101) consists of a structure formed, on the one hand, of a chassis (2; 102) having two opposite edges generally parallel to the direction of rolling (D), which chassis (2) supports a source of motive power (6) and is itself supported, along the said opposite edges, by a pair of side walls (3a, 3b; 103a, 103b) which in turn are each supported by at least one set of rolling gear (4a, 4b; 104) and form housings for the passage of transmission means from the said source of motive power (6) towards the said rolling gear, which is capable of converting the said motive power into work, characterized in that
the said side walls (3a, 3b; 103a, 103b) each have two opposite faces (7a, 7b; 107a, 107a', 107a'', 108) generally perpendicular to the direction of rolling (D) and on each of which the aforementioned coupling/uncoupling means (8a, 8a', 8b, 8b'; 108a, 108a') are provided,
and in that the said coupling/uncoupling means (8a, 8a', 8b, 8b'; 108a, 108a') are capable of interacting with mating coupling/uncoupling means belonging just as easily to a transport body of the container type as to a body intended for transporting passengers (12, 14; 114) and/or forming a driver's position (19, 10) to link rigidly said drive unit to said rolling body
so that the said drive unit (1; 101) forms a detachable part of the said vehicle, which can be coupled, by an operator of the vehicle, to different transport bodies, so as to form a vehicle adapted to a given use.

2. Drive unit according to claim 1, characterized in that it is not adapted to the normal transport of passengers or goods, or to incorporating a driver's position, and in that the dimension of its side walls (3a, 3b; 103a, 103b) in the direction of rolling (D) does not exceed its dimensions in the plane perpendicular to the said direction (D).

3. Drive unit (1; 101) according to claim 2, characterized in that it comprises a single pair of wheels (4a, 4b; 104).

4. Drive unit (1; 101) according to any one of the preceding claims, characterized in that the said rolling gear (4a, 4b; 104) is wheels for road transport, wheels for rail transport, hybrid raid/road wheels or caterpillar tracks.

5. Drive unit (1; 101) according to any one of claims 1 to 4, characterized in that the source of motive power (6) is a source of thermal or electrical power.

6. Drive unit (1; 101) according to any one of claims 1 to 5, characterized in that suspension means are incorporated into the said side walls (3a, 3b; 103a, 103b).

7. Vehicle incorporating the drive unit (1; 101) according to any one of claims 1 to 6, characterized in that it is inserted between two transport bodies (10, 12; 10, 14; 19, 114).

8. Vehicle according to claim 7, characterized in that one of the said transport bodies (12; 19) has no rolling gear.

9. Vehicle according to claim 8, characterized in that the said transport unit with no rolling gear is a special-purpose module (19) forming a driver's position.

10. Vehicle according to claim 7, characterized in that one of the said transport bodies (14; 114) has just one axle.

## Patentansprüche

1. Antriebseinheit (1, 101). die über Ein- und Auskupplungsmittel (8a, 8a', 8b, 8b'; 108a, 108a') direkt mit mindestens einer mit Rollorgahen verschenen Kammer (10, 14, 114), "Rollkammer" gehannt, gekuppelt werden kann, um ein Fahrzeug zu bilden, wobei diese Antriebseinheit (1; 101) aus einer Struktur besteht, die einerseits von einem Rahmen (2; 102) gebildet wird, der zwei einander entgegengesetzte im allgemeinen zur Fahrrichtung (D) parallele Ränder besitzt, wobei der Rahmen (2) eine Antriebsenergiequelle (6) trägt und seinerseits längs der entgegengesetzten Ränder von einem Paar von Seitenwänden (3a, 3b; 103a, 103b) getragen wird, die ihrerseits jeweils von mindestens einem Rollorgan (4a, 4b; 104) getragen werden und eine Aufnahme für den Durchgang von Übertragungsmitteln von der Antriebsenergiequelle (6) zu den Rollorganen bilden, die die Antriebeenergie in Arbeit umformen können, dadurch gekennzeichnet,
daß die Seitenwände (3a, 3b; 103a, 103b) jeweils zwei entgegengesetzte Flächen (7a, 7b; 107a, 107a', 107a'', 108) aufweisen, die im allgemeinen zur Fahrrichtung (D) senkrecht sind und auf deren jeder die Ein- und Auskupplungsmittel (8a, 8a', 8b, 8b'; 108a, 108a') vorgesehen sind, und
daß die Ein- und Auskupplungsmittel (8a, 8a', 8b, 8b'; 108a, 108a') mit zugeordneten Ein- und Auskupplungsmitteln zusammenwirken können, die abhängig sind sowohl von einer Transportkammer vom Typ Container als auch von einer Kammer, die für die Personenbeförderung bestimmt ist (12, 14, 114) und/oder eine Fahrerkabine (19, 10) bildet, so daß die Antriebseinheit mit der Rollkammer starr verbunden wird,
so daß die Antriebseinheit (1; 101) einen abtrennbaren Teil des Fahrzeugs bildet, der durch einen Betraibar des Fahrzeugs an verschiedene Transportkammern angekuppelt werden kann, so daß ein an einen gegebenen Verwendungszweck angepaßtes Fahrzeug gebildet wird.

2. Antriebseinheit nach Anspruch 1, dadurch gekennzeichnet, daß sie nicht an die normale Beförderung von Fahrgästen oder von Waren und auch nicht an die Integration einer Fahrerkabine angepaßt ist und daß die Abmessung ihrer Seitenwände (3a, 3b; 103a, 103b) in der Fahrrichtung (D) ihre Abmessungen in der zu dieser Richtung (D) senkrechten Richtung nicht überschreitet.

3. Antriebseinheit (1; 101) nach Anspruch 2, dadurch gekennzeichnet, daß sie ein einziges Räderpaar (4a, 4b; 104) aufweist.

4. Antriebseinheit (1; 101) nach einem der vorhergehenden Ansprüche, dadurch gekennzeichnet, daß die Rollorgane (4a, 4b; 104) Räder für den Straßentransport, Räder für den Transport auf Schienen, kombinierte Schienen/Straßenräder oder Raupen sind.

5. Antriebseinheit (1, 101) nach einem der Ansprüche 1 bis 4, dadurch gekennzeichnet, daß die Antriebsenergiequelle (6) eine thermische oder elektrische Energiequelle ist.

6. Antriebseinheit (1; 101) nach einem der Ansprüche 1 bis 5, dadurch gekennzeichnet, daß in die Seitenwände (3a, 3b; 103a, 103b) Aufhängungsmittel integriert sind.

7. Fahrzeug, in das die Antriebseinheit (1; 101) nach einem der Ansprüche 1 bis 6 eingegliedert ist. dadurch gekennzeichnet, daß sie zwischen zwei Transportkammern (10, 12; 10,14; 19, 114) eingesetzt ist.

8. Fahrzeug nach Anspruch 7, dadurch gekennzeichnet, daß eine der Transportkammern (12; 19) nicht mit Rollorganen ausgerüstet ist.

9. Fahrzeug nach Anspruch 8, dadurch gekennzeichnet, daß die nicht mit Rollorganen ausgerüstete Transporteinheit ein spezifisches Modul (19) ist, das eine Fahrerkabine bildet.

10. Fahrzeug nach Anspruch 7, dadurch gekennzeichnet, daß eine der Transportkammern (14; 114) nur eine einzige Radachse aufweist.
